# FASCICULE DE BREVET EUROPEEN

(11) **EP 1 281 161 B1**
(45) Date de publication et mention de la délivrance du brevet: **25.02.2004**
(21) Numéro de dépôt: 01927944.7
(22) Date de dépôt: 07.05.2001
(51) Int. Cl.: G06K 19/14, G01B 9/02, G07D 7/12

(54) **METHODE D'IDENTIFICATION D'UN OBJET**
VERFAHREN ZUM IDENTIFIZIEREN EINES GEGENSTANDES
METHOD FOR IDENTIFYING AN OBJECT

(30) Priorité: 08.05.2000 LU 90580
(43) Date de publication de la demande: 05.02.2003
(73) Titulaire: EUROPEAN COMMUNITY, 1049 Brussels (BE)
(72) Inventeur: CAUSSE D'AGRAIVES, Bertrand, I-21014 Laveno (IT); CHIARAMELLO, Michel, I-21014 Laveno M. (IT)
(74) Mandataire: Schmitt, Armand
(86) Numéro de dépôt international: PCT/EP2001/005147
(87) Numéro de publication internationale: WO 2001/086589

(56) Documents cités:
- EP-A- 0 768 511
- DE-A- 4 408 226
- GB-A- 2 221 870

## Description

### Introduction

La présente invention concerne une méthode d'identification d'un objet.

### Etat de la technique

Afin d'identifier chacun des objets d'une série d'objets d'apparence identique, la méthode la plus classique consiste à fixer sur chaque objet une plaque d'identification, chacune des plaques d'identification portant un signe distinctif. Toutefois, si les plaques d'identification sont échangées entre plusieurs objets de la série, il n'est plus possible d'identifier avec certitude un objet particulier de la série.

Le document GB-A-2 221 870 concerne un dispositif de sécurité destiné à être utilisé dans une méthode optique basée sur le phénomène d'interférométrie des tavelures, plus connu sous le nom de "Speckle Effect". Le dispositif de sécurité comprend un substrat sur, ou dans, lequel se trouve une structure diffusant les radiations. Cette structure diffusant les radiations provoque, lorsqu'elle est éclairée par un rayon cohérent de radiations, une diffusion aléatoire; les rayons diffusés interférant alors pour générer une figure d'interférence. II est à noter que la structure diffusant les radiations est formée par estampage à l'aide d'une matrice portant un motif en relief. Plus précisément, une couche de résine est estampée au moyen de ladite matrice pour y former le motif en relief, qui est ensuite recouvert d'une couche réfléchissante d'aluminium. La structure diffusant les radiations ainsi formée est ensuite montée sur un support, formant ainsi un dispositif de sécurité, qui est à son tour monté de manière inamovible sur un objet dont on souhaite garantir l'authenticité. L'utilisation de la matrice d'estampage a l'avantage de permettre la fabrication de dispositifs de sécurité identiques, qui seront fixés à des objets d'apparence identique pour en garantir l'authenticité.

L'authentification d'un objet se fait en vérifiant le dispositif de sécurité qui lui est associé. On compare la figure d'interférence du dispositif testé avec une figure d'interférence de référence, obtenue dans les mêmes conditions d'irradiation, et on conclut à l'authenticité de l'objet lorsque la figure d'interférence du dispositif testé et la figure de référence sont identiques.

Un tel dispositif de sécurité procure une sécurité relativement élevée, car il n'est pas envisageable qu'un contrefacteur potentiel puisse réaliser une copie de la structure diffusant les radiations, qui soit susceptible de générer une figure d'interférence identique à la figure de référence. Toutefois, vu la grande sensibilité du phénomène physique mis en jeu, la possibilité de fabriquer au moyen de la matrice une série dispositifs de sécurité identiques, qui génèrent des figures d'interférence identiques à la figure d'interférence de référence, est discutable. De plus, si un contrefacteur venait à s'emparer de la matrice, il pourrait alors aisément reproduire la structure diffusant les radiations, et donc également le dispositif de sécurité.

Par ailleurs, il faut noter que le dispositif de sécurité, qui constitue une plaque d'identification infalsifiable, ne permet pas l'identification d'un objet particulier d'une série d'objets d'apparence identique. Pour cela, il faut fabriquer un dispositif de sécurité différent pour chaque objet de la série. Toutefois, le problème évoqué plus haut subsisterait toujours, c'est-à-dire que si des dispositifs de sécurité étaient échangés, il ne serait plus possible d'identifier individuellement un objet de la série.

Enfin, la nécessité de fixer une plaque d'identification à l'objet à identifier ou authentifier peut se révéler problématique. En effet, il se peut qu'il ne soit pas possible de fixer la plaque d'identification de manière suffisamment solide. De plus, suivant l'usage qui est fait de l'objet, la plaque d'identification peut être endommagée.

### Objet de l'invention (Problème à résoudre par l'invention)

L'objet de la présente invention est de proposer une méthode d'identification d'un objet qui ne présente pas les inconvénients des méthodes employant des plaques d'identification, et qui permette notamment l'identification individuelle d'un objet d'une série d'objets d'apparence identique. Conformément à l'invention, cet objectif est atteint par une méthode selon la revendication 1.

### Description générale de l'invention revendiquée avec ses principaux avantages.

Par "surface intrinsèque" de l'objet à reconnaître, on entend une surface propre à l'objet, qui en fait partie intégrante, par opposition à une surface qui appartiendrait à un dispositif fixé sur l'objet dans un but d'identification.

La méthode selon l'invention utilise un phénomène d'interférence optique, connu sous le nom "d'interférométrie des tavelures", pour identifier un objet. Lorsqu'un objet, qui n'est pas un réflecteur spéculaire idéal, est éclairé par une lumière cohérente, des variations microscopiques à sa surface déphasent la lumière réfléchie et diffusée. Si l'on intercepte cette lumière, par exemple sur un écran, on peut y observer une figure d'interférence, ou figure de "Speckle", produite par les interférences entre les composantes déphasées de cette lumière. Dans la méthode selon l'invention, une figure d'interférence obtenue dans des conditions d'éclairage et d'interception déterminées est considérée comme une empreinte unique de la surface de l'objet exploré. En effet, vu la complexité du phénomène mis en jeu, sensible à des variations de surface à l'échelle du micron, seul le même objet replacé dans les mêmes conditions déterminées pourra produire une figure d'interférence essentiellement identique. Ainsi, conformément à la méthode selon l'invention, la figure d'interférence d'un objet à reconnaître est conservée comme figure d'interférence de référence, empreinte unique permettant son identification. Lorsqu'on souhaite par la suite identifier cet objet à reconnaître parmi une pluralité d'objet candidats susceptibles d'être l'objet à reconnaître, il suffit de placer chaque objet candidat dans les mêmes conditions d'éclairage et d'interception que celles utilisées pour obtenir la figure d'interférence de référence et d'en obtenir la figure d'interférence. Un degré de correspondance élevé entre une figure d'interférence obtenue pour un objet candidat et la figure d'interférence de référence permettra de conclure avec une forte probabilité à l'identité des deux objets, c'est-à-dire que l'objet candidat est bien l'objet à reconnaître. Un premier avantage de la présente méthode est sa sensibilité, qui la rend inviolable. En effet, la méthode est sensible à des variations de surfaces à l'échelle du micron, une substitution de l'objet à reconnaître par une copie étant donc difficilement envisageable.

Un deuxième avantage de la méthode selon l'invention est qu'elle ne nécessite aucun marquage, ni aucun traitement, de l'objet à reconnaître. En effet, on utilise de préférence l'état de surface naturel de l'objet à reconnaître. Il s'agit d'utiliser la surface propre de l'objet, qui fait donc partie intégrante de celui-ci, et qui n'a pas subi de traitement spécifique destiné à standardiser la figure d'interférence qu'elle est susceptible de produire. D'après la méthode selon l'invention, il suffit de choisir une portion de surface intrinsèque de l'objet, c'est-à-dire la zone d'identification, d'en obtenir la figure d'interférence, et de stocker cette figure de d'interférence comme figure de référence, empreinte unique de l'objet permettant ultérieurement son identification. L'identification de l'objet pourra alors se faire en obtenant une figure d'interférence de la même zone d'identification, dans les mêmes conditions d'irradiation, et en la comparant avec la figure de référence stockée. Généralement la surface de la zone d'identification sera une surface usinée par une machine-outil, suite à la mise en forme de l'objet par exemple. Mais le profil de surface résultant d'une telle mise en forme est aléatoire. La surface de l'objet, au niveau de la zone d'identification, possède donc un profil aléatoire, non standardisé. Par conséquent, cette zone d'identification est radicalement différente d'une zone d'identification qui aurait subi un traitement spécifique, par exemple un matriçage, en vue de standardiser la figure d'interférence susceptible d'être produite par cette zone d'identification. II s'en suit qu'il n'est pas possible pour un contrefacteur potentiel de reproduire la surface de la zone d'identification en s'appropriant une technique de traitement spécifique, puisqu'il n'en existe pas.

On notera en outre que dans la présente méthode d'identification, il n'est pas nécessaire de fixer un dispositif d'identification à l'objet en vue de son identification ultérieure, ce qui simplifie nettement la mise en oeuvre de la méthode. En particulier, cela élimine tout problème de fixation ou de dégradation du dispositif d'identification.

La méthode selon l'invention permet donc une identification sûre et infalsifiable d'un objet, et permet en particulier d'identifier individuellement un objet dans une série d'objets d'apparence identique.

Un autre avantage est que l'identification de l'objet se fait sans contact direct, ce qui évite l'usure de la zone d'identification et du moyen de lecture de la surface, qui ici est un faisceau de lumière.

De préférence, la source de lumière cohérente est un faisceau laser focalisé sur la zone d'identification. On peut utiliser une sources laser traditionnelle, par exemple du type HeNe, ou une diode laser, cette dernière offrant une plus grande souplesse d'utilisation.

La zone d'identification aura avantageusement une surface de 0,001 à 0,1 mm², de préférence de l'ordre de grandeur de 0,01 mm².

De préférence, la zone d'identification présente une rugosité crête-à-crête supérieure au quart de la longueur d'onde du laser. La zone d'identification peut notamment avoir une rugosité crête-à-crête de 0,15 à 0,20 µm, ce qui est le cas pour la plupart des surface métalliques non polies. On peut ainsi utiliser des lasers qui rayonnent dans le rouge.

L'interception de la lumière réfléchie par la zone d'identification peut se faire simplement par un écran. Toutefois, on préférera intercepter la lumière réfléchie avec une caméra ou un dispositif à couplage de charge, ce qui permet d'acquérir directement les figure d'interférence sur des moyen informatiques. La conservation de la figure d'interférence de référence peut donc se faire sur un support informatique. Par ailleurs, on déterminera avantageusement le degré de correspondance entre la figure d'interférence de référence et la figure d'interférence d'un objet candidat à l'aide de moyens informatiques de traitement d'images, ce qui permet plus d'objectivité.

De préférence, les moyens informatiques utilisés permettent le stockage et la comparaison de figures d'interférence comprenant une indication d'intensité de la lumière réfléchie, par exemple au moyen de niveaux de gris. En effet, une figure d'interférence comprenant des indications d'intensité de la lumière réfléchie est plus significative que par ex. une image binarisée (noir et blanc). Une telle figure d'interférence avec des niveaux de gris est donc plus riche en informations sur la zone d'identification observée. Le nombre de taches d'interférence nécessaires pour l'identification peut donc être plus faible, et de ce fait la dimension de la zone d'identification peut être réduite. Cela signifie également que, en employant par ex. des figures d'interférence avec des niveaux de gris, une plus faible quantité de centres de diffusion est suffisante, comparé à des figures d'interférence binarisées.

Une telle méthode d'identification d'objet peut être avantageusement développée pour fonctionner dans des systèmes de contrôle l'accès, c'est à dire des systèmes permettant de déclencher une action équivalente à une autorisation après contrôle de l'identité d'un objet introduit dans ce système. Elle peut cependant aussi être utilisée pour l'identification d'objets sensibles comme du combustible nucléaire. Dans ce contexte, elle a l'avantage de pouvoir être mise en oeuvre sous l'eau.

### Description à l'aide des Figures

D'autres particularités et caractéristiques de l'invention ressortiront de la description détaillée d'un mode de réalisation avantageux présenté ci-dessous, à titre d'illustration, en se référant aux dessins annexés. Ceux-ci montrent:
- Fig.1:: un schéma illustrant la réflexion de la lumière sur une surface polie;
- Fig.2:: un schéma illustrant la réflexion de la lumière sur une surface rugueuse;
- Fig.3:: un schéma d'un montage permettant la mise en oeuvre d'un mode de réalisation préféré de la méthode selon l'invention;
- Fig.4:: une figure de Speckle.

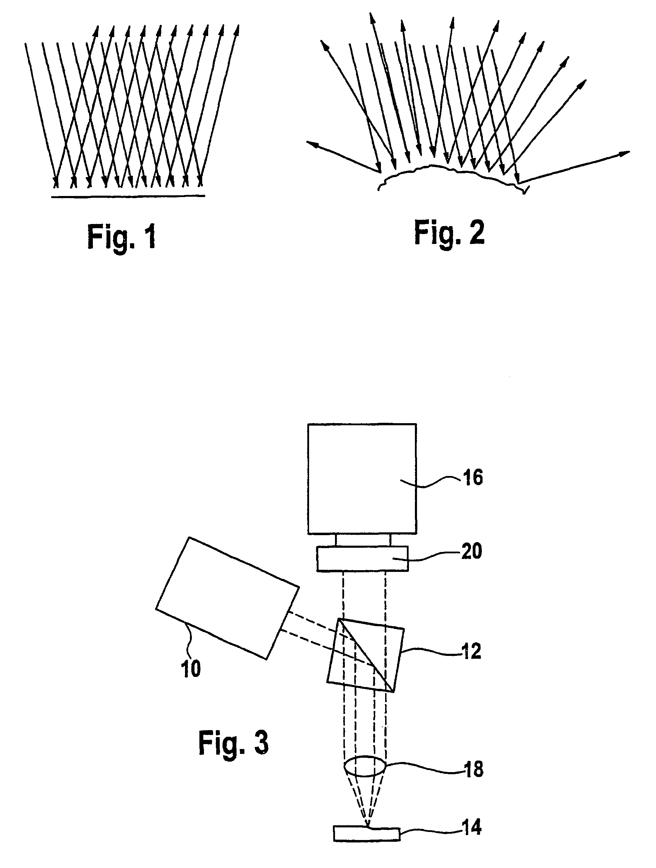

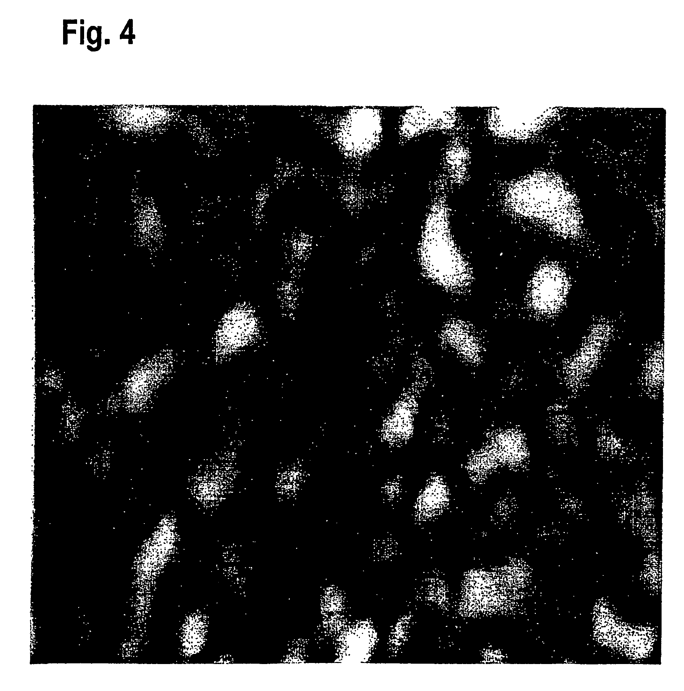

La méthode selon l'invention utilise un phénomène d'interférences optiques, connu sous le nom d'interférométrie des tavelures, pour l'identification d'objet, Lorsqu'une surface est éclairée par un faisceau optique, tous les points élémentaires de cette surface réfléchissent la lumière incidente. Dans le cas d'une surface du type miroir, ces points réfléchissent tous dans la même direction comme illustré sur la Fig.1. Dans le cas d'une surface rugueuse, ce qui est généralement le cas, les points élémentaires réfléchissent dans toutes les directions de l'espace, on parle alors de diffusion. Si le faisceau incident est cohérent, la surface réfléchit et diffuse dans toutes les directions de l'espace des faisceaux élémentaires qui peuvent interférer. En interceptant les faisceaux élémentaires réfléchis sur un écran par exemple, on obtient une figure d'interférence, ou figure de Speckle, se composant de taches plus ou moins lumineuses comme montré sur la Fig.4. Une telle figure d'interférence est sensible à des variations de surfaces à l'échelle du micron.

Ainsi, selon un aspect important de l'invention, on considère qu'une figure d'interférence produite par une portion de surface donnée dans des conditions d'éclairage et d'interception déterminées est unique. Une autre portion de surface, provenant du même objet ou d'un objet différent dans les mêmes conditions donnera une figure d'interférence différente. Une telle figure d'interférence constitue donc une empreinte unique d'une surface et peut être utilisée pour identifier un objet.

C'est sur base de cette observation qu'a été développée la méthode d'identification d'objet selon l'invention. Sur la Fig.3 est représenté un schéma d'un montage permettant la mise en oeuvre d'un mode de réalisation préféré de cette méthode. La référence 10 indique une source laser qui est une diode laser Lepton II (Micro Laser system) permettant l'émission d'un faisceau de lumière cohérente monochromatique de 6 mm de diamètre et de divergence négligeable. Le faisceau de lumière issu de la diode laser est réfléchi sur un séparateur 12 en direction d'un objet cible 14. Comme expliqué, le faisceau de lumière incident est réfléchi et diffusé par la surface de l'objet cible 14. Une caméra 16 permet d'intercepter une partie de la lumière réfléchie par la surface de l'objet cible 14 de sorte à obtenir une figure d'interférence. Une lentille 18 de type "plan-convexe", montée entre l'objet cible 14 et le séparateur 12, focalise le faisceau incident sur la surface de la cible 14 et fait office de diaphragme pour la collection du faisceau réfléchi par la surface de l'objet cible 14. Un filtre 20, placé devant la caméra 16 et ne laissant passer que la lumière de même longueur d'onde que le laser 10, permet de s'affranchir des conditions de lumière ambiante. Le séparateur 12 réalise la séparation de la lumière renvoyée par l'objet cible du faisceau incident. Son orientation est telle que des réflexions parasites ne se forment pas sur le capteur de la caméra 16. On notera que l'utilisation du séparateur 12 permet d'obtenir un montage compact, car les faisceaux incidents et réfléchis empruntent le même chemin optique entre le séparateur 12 et l'objet cible 14. L'utilisation d'une caméra 16 connectée à un ordinateur permet de procéder à l'acquisition directe des figures d'interférence, et de les conserver sous formes de fichier informatique. De plus, l'analyse des figures d'interférences peut se faire plus objectivement à l'aide de logiciels de traitement de données. De préférence, les images des figures d'interférence stockées comprennent une indication d'intensité de la lumière réfléchie matérialisée par des niveaux de gris.

Dans une première étape (étape 1) de la méthode selon l'invention, l'objet cible 14 de la Fig.3 est un objet à reconnaître. On positionne l'objet à reconnaître dans une position déterminée, définie par exemple par des plots de positionnement. On procède alors à l'acquisition d'une figure d'interférence d'une portion de surface intrinsèque de l'objet à reconnaître, appelée zone d'identification, dans des conditions d'éclairage et d'interception de la lumière réfléchie déterminées, que l'on mémorise. Par "surface intrinsèque" on entend une surface propre à l'objet, qui en fait partie intégrante. La figure d'interférence est alors conservée (étape 2) dans l'ordinateur comme figure d'interférence de référence de l'objet à reconnaître. II est à noter que la surface de la zone d'identification n'a pas subi de traitement spécifique, mais qu'elle a son état de surface naturel (ou brut), et possède donc un profil de surface aléatoire, généralement résultant de l'usinage de l'objet.

La présente méthode permet par la suite d'identifier cet objet à reconnaître parmi d'autres objets. Ainsi, conformément à l'étape 3, on place un objet candidat susceptible d'être l'objet à reconnaître dans la même position, assurant les mêmes conditions d'éclairage et d'interception que celles utilisées pour obtenir la figure d'interférence de référence, conditions de l'étape 1. Il s'agit la entre autres de positionner l'objet de sorte qu'il se trouve dans la même configuration (distance, orientation, centrage) par rapport aux instruments optiques du montage qu'au cours de l'étape 1. La figure d'interférence obtenue est alors comparée (étape 4) à la figure d'interférence de référence à l'aide du logiciel de traitement d'image. On détermine ainsi un degré de correspondance entre la figure d'interférence et la figure d'interférence de référence, à partir duquel on peut évaluer la probabilité d'identité entre l'objet à reconnaître et l'objet candidat.

La zone d'identification de l'objet à reconnaître peut avoir une superficie très petite, de l'ordre de 0,01 mm². Pour bien observer le phénomène d'interférence, la zone d'identification devrait de préférence présenter des variation de surface de hauteur, crête-à-crête, supérieures au quart de la longueur d'onde du laser. On parle donc ici de la rugosité Rt (amplitude crête-à-crête) et non pas de la rugosité Ra. Par exemple, la rugosité peut avoir une valeur d'environ 0,16 µm lorsqu'on travaille avec un laser rouge à 0,633 µm.

On remarquera que le système optique, c'est-à-dire la disposition du montage de la Fig.3, ainsi que l'intensité du laser sont les paramètres les plus importants lors de l'obtention d'une figure d'interférence. C'est pourquoi à l'étape 3, on reproduit les mêmes conditions d'éclairage (intensité du laser) et d'interception (même disposition du montage) qu'à l'étape1. Si ces conditions sont respectées et que l'objet candidat courant est l'objet à reconnaître, on obtiendra une figure d'interférence sensiblement identique à la figure d'interférence de référence, sous réserve évidemment que la portion de surface observée est bien la même qu'à l'étape 1. II est donc important de bien positionner les objets candidats sous le montage de la Fig.3. Par exemple, lorsqu'on utilise des objets rectangulaires de hauteur égale, on peut prévoir un support d'objet avec des plots de positionnement disposés à angle droit. On calera alors tous les échantillons de la même manière contre ces plots, ce qui permet une excellente reproductibilité de positionnement. Ainsi, si l'objet candidat courant est l'objet à reconnaître, le faisceau incident se trouvera automatiquement sur la zone d'identification.

Comme indiqué précédemment, la présente méthode peut être avantageusement appliquée pour l'identification de piles à combustible nucléaire. On utilise alors une portion de surface de ce combustible comme zone d'identification. Dans ce contexte, la méthode a l'avantage de pouvoir être mise en oeuvre sous l'eau. On peut par ex. installer une base, comprenant le laser et la caméra, à distance des piles à combustible à identifier, et approcher ces dernière à l'aide d'une sonde reliée à la base au moyen de fibres optiques.

## Revendications

1. Méthode d'identification d'un objet comprenant les étapes suivantes :
(a) choisir une surface intrinsèque d'un objet à reconnaître qui n'a pas subi de traitement spécifique destiné à standardiser la figure d'interférence qu'elle est susceptible de produire ;
(b) éclairer au moins une zone d'identification dans ladite surface intrinsèque dudit objet à reconnaître avec une lumière cohérente et intercepter au moins une partie de la lumière réfléchie par ladite zone d'identification, de sorte à obtenir une figure d'interférence dans des conditions d'éclairage et d'interception déterminées ;
(c) conserver cette figure d'interférence comme figure d'interférence de référence de l'objet à reconnaître ;
(d) placer un objet candidat susceptible d'être l'objet à reconnaître dans des les mêmes conditions d'éclairage et d'interception que celles utilisées pour obtenir ladite figure d'interférence de référence et obtenir de cet objet candidat une figure d'interférence ;
(e) comparer ladite figure d'interférence de référence à ladite figure d'interférence de l'objet candidat ; et
(f) évaluer la probabilité d'identité entre l'objet à reconnaître et l'objet candidat en fonction du degré de correspondance entre ladite figure d'interférence de référence et ladite figure d'interférence de l'objet candidat.

2. Méthode selon la revendication 1, **caractérisée en ce que** la source de lumière cohérente est un faisceau laser focalisé sur ladite zone d'identification.

3. Méthode selon la revendication 1 ou 2, **caractérisée en ce que** ladite zone d'identification a une surface de 0,001 à 0,1 mm².

4. Méthode selon la revendication 1, 2 ou 3, **caractérisée en ce que** ladite zone d'identification a une surface de l'ordre de grandeur de 0,01 mm².

5. Méthode selon l'une quelconque des revendications précédentes, **caractérisée en ce que** ladite zone d'identification a une rugosité crête-à-crête supérieure au quart de la longueur d'onde du laser.

6. Méthode selon la revendication 5, **caractérisée en ce que** ladite zone d'identification a une rugosité crête-à-crête de 0,15 à 0,20 µm.

7. Méthode selon l'une quelconque des revendications précédentes, **caractérisée en ce que** l'on intercepte la lumière réfléchie au moyen d'un écran, d'une caméra ou d'un dispositif à couplage de charge.

8. Méthode selon l'une quelconque des revendications précédentes, **caractérisée en ce qu'**on procède à l'acquisition des figures d'interférence avec des moyens informatiques, et **en ce que** la figure d'interférence de référence est conservée sur un support informatique.

9. Méthode selon l'une quelconque des revendications précédentes, **caractérisée en ce que** le degré de correspondance entre ladite figure d'interférence de référence et ladite figure d'interférence de l'objet candidat est déterminé à l'aide de moyens informatiques de traitement d'images.

10. Méthode selon la revendication 8 ou 9, **caractérisée en ce que** lesdits moyens informatiques permettent le stockage et la comparaison de figures d'interférence comprenant une indication d'intensité de la lumière réfléchie.

11. Méthode selon l'une quelconque des revendications précédentes, **caractérisée en ce que** ladite surface intrinsèque est une surface usinée dudit objet à reconnaître.

## Patentansprüche

1. Verfahren zum Identifizieren eines Gegenstandes mit den folgenden Schritten:
(a) Auswahl einer eigenen Oberfläche eines zu erkennenden Gegenstandes, der keiner spezifischen Behandlung zur Standardisierung der von ihr erzeugbaren Interferenzfigur unterzogen wurde;
(b) Beleuchten zumindest eines Identifizierungsbereichs der eigenen Oberfläche des zu erkennenden Gegenstandes mit einem kohärenten Licht und Abfangen zumindest eines Teils des vom Identifizierungsbereich reflektierten Lichts, um unter bestimmten Beleuchtungs- und Abfangbedingungen eine Interferenzfigur zu gewinnen;
(c) Aufbewahrung dieser Interferenzfigur als Vergleichsinterferenzfigur des zu erkennenden Gegenstandes;
(d) Positionierung eines Testgegenstandes, welcher der zu erkennende Gegenstand sein könnte, in den gleichen Beleuchtungs- und Abfangbedingungen wie zur Gewinnung der Vergleichsinterferenzfigur, und Gewinnung einer Interferenzfigur des Testgegenstandes;
(e) Vergleich zwischen der Vergleichsinterferenzfigur und der Interferenzfigur des Testgegenstandes;
(f) Abschätzung der Wahrscheinlichkeit der Identität zwischen dem zu erkennenden Gegenstand und dem Testgegenstand in Abhängigkeit des Grads der Übereinstimmung zwischen der Vergleichsinterferenzfigur und der Interferenzfigur des Testgegenstandes.

2. Verfahren nach Anspruch 1, **dadurch gekennzeichnet, dass** die Quelle kohärenten Lichts ein auf den Identifizierungsbereich fokussierter Laserstrahl ist.

3. Verfahren nach Anspruch 1 oder 2, **dadurch gekennzeichnet, dass** die Fläche des Identifizierungsbereichs 0,001 bis 0,1 mm² beträgt.

4. Verfahren nach Anspruch 1, 2 oder 3, **dadurch gekennzeichnet, dass** die Fläche des Identifizierungsbereichs in der Größenordnung von 0,01 mm² liegt.

5. Verfahren nach einem der vorhergehenden Ansprüche, **dadurch gekennzeichnet, dass** der Identifizierungsbereich eine Rauheit von Spitze zu Spitze aufweist, welche größer ist als ein Viertel der Laser-Wellenlänge.

6. Verfahren nach Anspruch 5, **dadurch gekennzeichnet, dass** die Rauheit von Spitze zu Spitze des Identifizierungsbereichs 0,15 bis 0,20 µm beträgt.

7. Verfahren nach einem der vorhergehenden Ansprüche, **dadurch gekennzeichnet, dass** das reflektierte Licht mittels eines Schirms, einer Kamera oder einer Vorrichtung mit Ladungskopplung abgefangen wird.

8. Verfahren nach einem der vorhergehenden Ansprüche, **dadurch gekennzeichnet, dass** die Gewinnung der Interferenzfiguren mit Mitteln zur elektronischen Datenverarbeitung erfolgt und dass die Vergleichsinterferenzfigur auf einem elektronischen Datenträger gespeichert wird.

9. Verfahren nach einem der vorhergehenden Ansprüche, **dadurch gekennzeichnet, dass** der Grad der Übereinstimmung zwischen der Vergleichsinterferenzfigur und der Interferenzfigur des Testgegenstandes mit Hilfe von Mitteln zur elektronischen Bildbearbeitung festgestellt wird.

10. Verfahren nach Anspruch 8 oder 9, **dadurch gekennzeichnet, dass** die elektronischen Datenverarbeitungsmittel die Speicherung und den Vergleich von einem Hinweis auf die Intensität des reflektierten Lichts enthaltenden Interferenzfiguren ermöglichen.

11. Verfahren nach einem der vorhergehenden Ansprüche, **dadurch gekennzeichnet, dass** es sich bei der eigenen Oberfläche um eine bearbeitete Oberfläche des zu erkennenden Gegenstandes handelt.

## Claims

1. A method for identifying an object comprising the following steps:
(a) selecting an intrinsic area of an object to be recognized, which has not undergone any specific treatment for standardizing the interference pattern which it is susceptible to produce;
(b) illuminating at least one identification area in said intrinsic surface of said object to be recognized with a coherent light and intercepting at least one portion of the light reflected by said identification area, in order to obtain an interference pattern under determined illumination and interception conditions;
(c) retaining this interference pattern as a reference interference pattern of the object to be recognized;
(d) placing a candidate object likely to be the object to be recognized under the same illumination and interception conditions as those used for obtaining said reference interference pattern and obtaining an interference pattern from this candidate object;
(e) comparing said reference interference pattern with said interference pattern of the candidate object; and
(f) evaluating the probability of identity between the object to be recognized and the candidate object depending on the matching level between said reference interference pattern and said interference pattern of the candidate object.

2. A method according to claim 1, **characterized in that** the source of coherent light is a laser beam focused on said identification area.

3. A method according to claim 1 or 2, **characterized in that** said identification area has a surface area from 0.001 to 0.1 mm².

4. A method according to claim 1, 2 or 3, **characterized in that** said identification area has a surface of the order of magnitude of 0.01 mm².

5. A method according to any one of the preceding claims, **characterized in that** said identification area has a peak-to-peak roughness, which is larger than a quarter of the laser's wavelength.

6. A method according, to claim 5, **characterized in that** said identification area has a peak-to-peak roughness from 0.15 to 0.20 µm.

7. A method according to any one of the preceding claims, **characterized in that** the reflected light is intercepted by means of a screen, a camera or a charge coupled device.

8. A method according to any one of the preceding claims, **characterized in that** one proceeds with the acquisition of interference patterns, with computer means and **in that** the reference interference pattern is retained on a computer medium.

9. A method according to any one of the preceding claims, **characterized in that** the matching level between said reference interference pattern and said interference pattern of the candidate object is determined by image processing computer means.

10. A method according to claim 8 or 9, **characterized in that** said computer means allows interference patterns to be stored and compared, comprising an indication of the intensity of the reflected light.

11. A method according to any one of the preceding claims, **characterized in that** said intrinsic surface is a machined surface of said object to be recognized.
